# EUROPÄISCHE PATENTSCHRIFT

(11) **EP 0 896 203 B1**
(45) Veröffentlichungstag und Bekanntmachung des Hinweises auf die Patenterteilung: **13.04.2005**
(21) Anmeldenummer: 98113517.1
(22) Anmeldetag: 06.07.1998
(51) Int. Cl.: G01B 11/27, G01C 15/00

(54) **Vorrichtung zum gegenseitigen Ausrichten von Körpern**
Device for mutually aligning bodies
Dispositif pour aligner des éléments entre eux

(30) Priorität: 05.08.1997 DE 19733919
(43) Veröffentlichungstag der Anmeldung: 10.02.1999
(73) Patentinhaber: Prüftechnik Dieter Busch AG, 85737 Ismaning (DE)
(72) Erfinder: Busch, Dieter, 85737 Ismaning (DE); Hermann, Michael, 78050 Villingen (DE); Konetschny, Volker, 85640 Putzbrunn (DE); Lysen, Heinrich, 85748 Garching (DE)

(56) Entgegenhaltungen:
- WO-A-89/10535
- WO-A-97/23764
- DE-A- 19 546 405

## Beschreibung

Die Erfindung betrifft eine Vorrichtung zum gegenseitigen Ausrichten von Körpern, insbesondere zum Parallelrichten von Wellen, Walzen und dergleichen rotationssymmetrischen Körpern.

Eine solche Vorrichtung ist bekannt aus der DE 19546405. In der dortigen Anmeldeschrift wird beschrieben, wie unter Verwendung z.B. eines faseroptischen Kreisels mit einer Lagemess-Sonde Winkeldaten gewonnen werden. Dadurch ist auf Grundlage der Winkeldaten feststellbar, ob und ggf. welche Lagekorrekturen an auszurichtenden Körpern, speziell an Wellen oder Walzen, vorgenommen werden müssen, um diese in einen gewünschten Ausrichtungszustand zu bringen. Zu diesem Zweck ist es erforderlich, die genannte Lagemess-Sonde in einer sukzessiv fortschreitenden Weise jeweils auf einen der auszurichtenden Körper zu bringen. Die Lagemess-Sonde ist so konstruiert, dass sie die Winkellage des Körpers relativ zu einem raumfesten Bezugs-Koordinatensystem ermitteln kann. Für die Mehrzahl der Anwendungsfälle ist es dabei jedoch nur erforderlich, dass die Winkellage des Körpers hisichtlich der Koordinaten "Azimuth" und "Elevation" durch die Lagemess-Sonde ermittelbar ist.

Eine andere Vorrichtung zum Ausrichten von rotationssymmetrischen oder anderen Körpern wird in der Anmeldeschrift WO 89/10535 dargestellt. Eine laseroptisch/elektronische Meßeinrichtung umfaßt eine Einrichtung zur Erzeugung mindestens eines Laserstrahls, welche in starre Verbindung mit einem ersten Körper gebracht werden kann. Ein von dieser emittierter Laserstrahl trifft auf eine Empfangseinrichtung, welche in starrer Verbindung mit einem zweiten, auszurichtenden Körper steht. Innerhalb der Empfangseinrichtung sind zwei optoelektronisch wirkende Sensoren angeordnet, welche über ein Strahlteilersystem vom Laserstrahl beleuchtet werden. Auf diese Weise kann eine Messung durchgeführt werden, als wenn zwei Sensoren in Strahlrichtung hintereinander positioniert wären. Die dort beschriebene Vorrichtung ist geeignet, translatorischen und richtungsmäßigen Versatz zwischen Sende- und Empfangseinrichtung mit großer Auflösung und Genauigkeit anzugeben.

WO-A-97 23 764 beschreibt eineweitere Vorrichtung zum Ausrichten von walzenförmigen Körpern entlang einer Referenzrichtung. Dabei wird mittels eines Laserstrahls eine Referenzrichtung festgelegt, entlang der die Walze auszurichten ist. Dazu wird ein Spiegel auf die Peripherie der Walze aufgesetzt, welcher den Referenzstrahl in sich selbst reflektiert, wenn die Walze ausgerichtet ist. Weitere Walzen werden mit Hilfe einer gyroskopischen Lagemess-Sonde zur ersten Walze parallelgerichtet. Es ist daher Aufgabe der Erfindung, eine Einrichtung oder Vorrichtung anzugeben, welche nicht mit den vorgenannten Nachteilen behaftet ist. Diese Aufgabe wird mit den Mitteln des Anspruchs 1 gelöst.

Die Erfindung geht dabei von folgender Erkenntnis aus: Es ist zwar besonders praktisch, einen Richtungsvergleich von Körpern dadurch bewirken, dass eine Richtungsmess-Sonde von einem zum anderen, zu referenzierenden Körper transportiert wird. Diese direkte Vorgehensweise ist jedoch nicht zwingend. Vielmehr ist es gemäss der Erfindung auch möglich, eine indirekte Vorgehensweise zu verwenden. Dieses ist erfindungsgemäss insbesondere dann vorteilhaft, wenn die genannten Walzen oder Körper vergleichsweise unzugänglich sind, wie im obigen beschrieben. Die vorliegende Erfindung sieht daher vor, die Richtung eines Körpers dadurch zu bestimmen, dass ein geeigneter, relativ kleinvolumiger Adapter in definierter Weise mit einem Körper in Verbindung gebracht wird, dessen Winkelausrichtung im Raum, relativ zu einem feststehenden Koordinatensystem (häufig als Laborkoordinaten-System bezeichnet), zu vermessen ist. Dieser Adapter stellt einen ersten Teil einer kombinierten Lagemessonde mit im wesentlichen zwei Komponenten dar. Die Ausrichtung des Adapters ist dabei vorzugsweise so, dass eine seiner Hauptachsen beim Aufsetzen des Adapters auf denKörper zwangsweise parallel zu einer ausgezeichneten Achse des Körpers zu liegen kommt. Diese ausgezeichnete Achse kann beispielsweise die Rotationsachse einer Walze oder Welle oder dgl. sein. Insgesamt ist der vorgesehene Adapter relativ kleinvolumig. Als Teil einer kombinierten Lagemess-Sonde, bestehend aus mehreren Komponenten, fuhrt der Adapter eher nur indirekte Messfunktionen aus. Dabei stellt er eine eigenständige Lichtquelle dar und ist in der Lage, einen Lichtstrahl auszusenden. Zur Erzeugung eines solchen Lichtstrahls ist vorzugsweise ein Halbleiterlaser vorgesehen, insbesondere ein batteriebetriebener Halbleiterlaser. Die relative Winkellage des Adapters, mithin die relative Winkellage des auszumessenden Körpers, wird sodann gemäss der Erfindung indirekt mit Hilfe einer zusätzlichen Einrichtung ermittelt. Die zusätzliche Einrichtung stellt damit einen zweiten, und zwar den aktiv messenden Teil einer kombinierten Lagemess-Sonde dar. Sie ist nämlich auch in der Lage, die Funktionen eines Gyroskops (Kreisels) auszuführen und kann daher ihre eigene Orientierung im Raum, bezüglich eines Laborsystems, feststellen. Wird sie gleichzeitig als Empfangsgerät für einen Lichtstrahl, z.B. einen Laserstrahl benutzt, so kann sie dabei die Richtung eines eintreffenden Lichtstrahles richtungsmässig auswerten. Es ist daher im Endeffekt möglich, die relative Lage des Körpers, bezogen auf ein zugrundegelegtes Laborsystem, zu bestimmen. Wie erwähnt, kann der Körper speziell eine Walze sein. Die Richtungserkennung vereinfacht sich, wenn die zusätzliche Einrichtung in einem Spezialfall nur solche Lichtstrahlen detektieren soll, welche aus einer einzigen, vorgeschriebenen Richtung einfallen. In beiden Fällen kann jedoch von der Relativlage der genannten zusätzlichen Einrichtung und aus den Einstrahlungswinkeln direkt auf die Relativlage des auszumessenden Körpers geschlossen werden. Dabei ist jeweils vorausgesetzt, dass der genannte Adapter so auf den Körper aufgesetzt ist, dass der von ihm emittierte Lichtstrahl parallel zu einer körpereigenen Vorzugsachse orientiert ist. Das vorgenannte Verfahren kann wegen der Verwendung eines Adapters mit eigener Lichtstrahl-Erzeugung als "emittives" Verfahren bezeichnet werden.
Mit dem genannte Verfahren ist es also möglich, in sukzessiver Folge die Ausrichtung eines ersten, zweiten usw. Körpers in einem Laborkoordinatensystem zu bestimmen, und zwar mittels eines relativ kleinvolumigen Sondenteils (Adapters) von ca. 15 - 30 mm Durchmesser. Zusammenfassend kann gesagt werden, dass die Erfindung eine Vorrichtung oder ein zugehöriges Verfahren zum gegenseitigen Ausrichten von Körpern betrifft, insbesondere zum Parallelrichten von Wellen, Walzen oder rotationssymmetrischen Körpern, und eine kombinierte Lagemess-Sonde umfasst. Die Lagemessonde besteht aus einem Empfangsgerät und einem Adapter, welcher auf einen auszurichrenden Körper, insbesondere eine Walze aufsetzbar ist, so dass bevorzugte Achsen von Adapter und Körper oder Walze parallel orientiert sind, und welcher Adapter mit einer einen Lichtstrahl emittierenden Einrichtung versehen ist, und wobei der Lichtstrahl eines auf einen Körper oder eine Walze aufgesetzten Adapters parallel zu einer ausgezeichneten Achse, speziell einer Rotationsachse eines solchen Körpers bzw. einer solchen Walze orientiert ist, und wobei das Empfangsgerät die simultan erfolgende Feststellung einer Winkellage von Adapter und Körper oder Walze bezüglich eines Laborsystems durch die Ausführung folgender Funktionen bewirkt:
a) Ermitttlung seiner eigenen winkelmässigen Ausrichtung relativ zu den Koordinaten eines vorgegebenen raumfesten Koordinaten-Systems (Laborsystems),
b)Ermittlung der Empfangsrichtung eines Lichtstrahles, nach zwei Winkelkoordinaten, relativ zu seinen eigenen Gehäusedimensionen
c)Errechnung der laborsystemmässigen Winkellage des Adapters nach Massgabe von Messwerten, welche mittels Funktionen a) und b) gewonnen wurden, unter Verwendung einer eigenen Elektronik oder durch ein intern oder extern angebrachtes Rechengerät (Computer).

Die Erfindung wird im folgenden anhand der Zeichnung näher erläutert.
Es zeigt:
- Fig. 1: eine Anordnung von paralell zueinander und senkrecht zu einem Gestell auszurichtende Körpern
- Fig. 2: die windschiefe Lage zweier Körper gemäss Fig. 1 in stark überhöhtem Winkelmasstab
- Fig. 3: eine prinzipielle Anordnung von Bestandteilen einer emittiv arbeitenden Lagemess-Sonde relativ zu einem zu vermessenden Körper
- Fig. 4: eine Vorrichtung zur Messung der Richtung eines eintreffenden Lichtstrahles, unter Verwendung eines Fernrohres

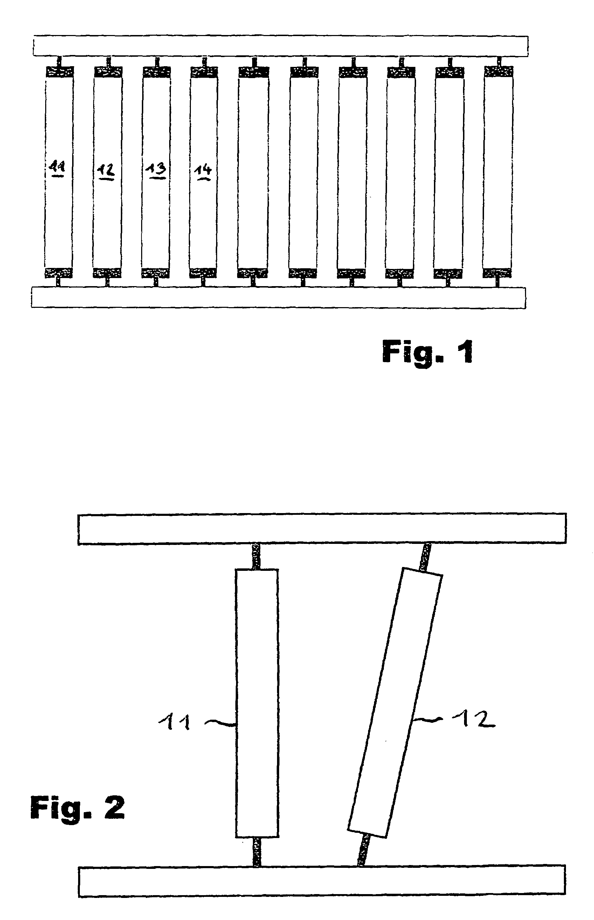

Wie in Fig. 1 und Fig. 2 gezeigt wird, ist es für die Ausrichtung z.B. von Walzen 11, 12, 13, welche im wesentlichen parallel nebeneinander ausgerichtet sind, erforderlich, diese sowohl in einer Horizontalebene auszurichten (Azimuth-Ausrichtung), als auch bezüglich einer Vertikal-Ebene (Elevations-Ausrichtung). (Die in analogem Zusammenhang ebenfalls verwendeten Begriffe wie Höhen-, Seiten-, Quer- Ausrichtung, oder pitch, yaw, roll usw. sind dem Fachmann geläufig. Zur Vermeidung von Verwechselungen werden für die hier beschriebene Erfindung bevorzugt die Begriffe Azimuth und Elevation verwendet. Die Spezifikation eines dritten Bezugswinkels kann in diesem Zusammenhang normalerweise entfallen.)

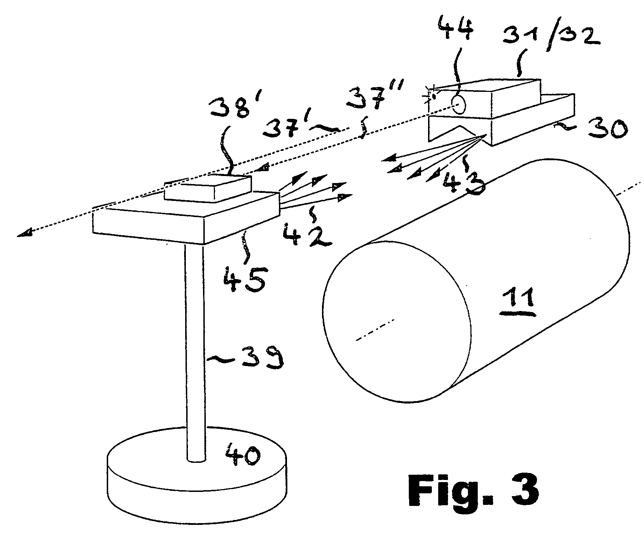

Gemäss der Erfindung (vgl. Fig. 3) gelingt die Ausrichtung solcher Körper, speziell in Walzenform, in zwei Richtungen des Raumes (und bezüglich eines Laborsystems) dadurch, dass auf eine Walze 11 ein prismatischer oder v-förmiger Adapter 30 aufgesetzt wird. Dieser Adapter 30 kann durch eine v-förmige Verlängerung in Achsrichtung der gezeigten Walze 11 (stellvertretend auch für Walze 12, 13, usw.) verlängert sein, oder mit einem Aufsatz 32 stabiler gestaltet werden. An oder in dem Adapter ist ein Halbleiterlaser 44 fest angebracht, welcher ein- und ausschaltbar ist und bevorzugt von einer Batterie elektrisch versorgt wird. Die elektrische Versorgung kann auch über ein verlegbares Anschlusskabel erfolgen. Der Adapter ist so gefertigt, und der Halbleiterlaser ist an oder im Adapter so angebracht, dass die Emissionsrichtung des Lasers bei Auflegen des Adapters 30 auf Walze 11 parallel zu der Drehachse der Walze 11 orientiert ist. Gemäss der Erfindung wird das bereits genannte Empfangsgerät 45 zumindest kurzfristig, ggf. länger andauernd so aufgestellt oder gehalten, dass es durch den Laserstrahl getroffen werden kann. Es kann aufgrund seiner Konstruktion mit eingebautem Gyroskop seine eigene Orientierung relativ zu den Koordinaten eines Laborsystems erkennen, die Richtung eines eintreffenden Laserstrahls bestimmen und beide Daten so miteinander in Bezug setzen, dass die relative Orientierung des Lasers 44, mithin die Orientierung des Adapters 30, mithin die Orientierung der Walze 11 errechnet werden kann. (In einer vereinfachten Ausführungsform ist das Empfangsgerät auf einem versetzbaren Stativ 39, 40 montiert).

Der gezeigte Lichtstrahl 37" trifft die Empfangsfläche eines geeigneten, an sich bekannten Strahldetektors, welcher sich im Empfangsgerät 45 befindet. Insbesondere ist es von Vorteil, für einen solchen optoelektronischen Strahldetektor einen Zweischicht-Sensor zu wählen, welcher für zwei Ebenen die Positionen eines auftreffenden Lichtstrahl in jeweils x- und y-Koordinaten ermitteln und als elektrisches Signal ausgeben kann. Mit diesem Mittel ist es möglich, die Richtung eines einfallenden Lichtstrahles relativ zu den Sensorachsen, und damit relativ zu den Dimensionen (Hauptachsen) des Empfangsgerätes 45 zu bestimmen. Die Strahlenbündel 42 symbolisieren das Strahlungsfeld einer eventuell zusätzlich vorgesehenen Einrichtung zur Entfernungsmessung zwischen Adapter 30 und Empfangsgerät 45.

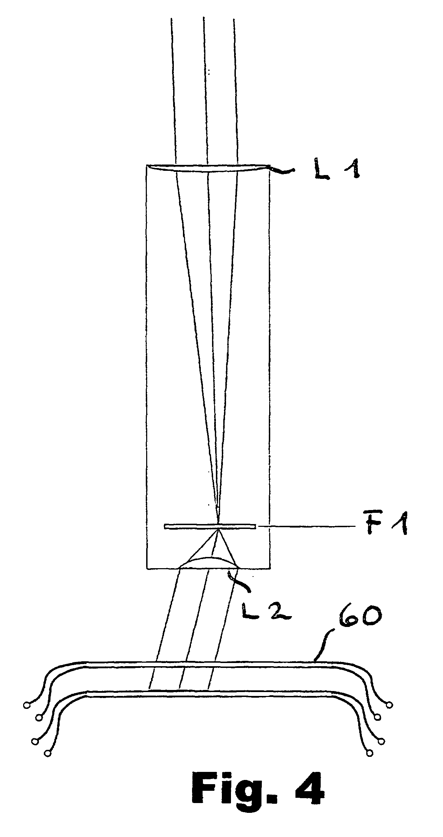

Gemäss Fig. 4 kann eine Optik in Form eines Fernrohres mit Linsen L1, L2 verwendet werden, um kleine Winkelabweichungen eines in ein Empfangsgerät 45 bzw. Sensorgehäuse 38' einfallenden Lichtstrahles linear vergrössert darzustellen, so dass die wirksame Auflösung eines optoelektronischen Sensors 60 verbessert wird.

## Patentansprüche

1. Vorrichtung zum gegenseitigen Ausrichten von Körpern, insbesondere zum Parallelrichten von Wellen, Walzen (11, 12, 13 ) oder rotationssymmetrischen Körpern, mit einer kombinierten Lagemess-Sonde, bestehend aus einem Empfangsgerät (45, 38') und einem Adapter (30), welcher auf einen auszurichtenden Körper, insbesondere eine Walze (11) aufsetzbar und mit einer einen Lichtstrahl emittierenden Einrichtung (44) versehen ist, wobei der Lichtstrahl parallel zu einer ausgezeichneten Achse, speziell einer Rotationsachse eines solchen Körpers bzw. einer solchen Walze (11) orientiert ist, und wobei das Empfangsgerät (45) geeignet ist, die Winkellage von Adapter (30) und Körper oder Walze (11) bezüglich eines vorgegebenen raumfesten Koordinaten-Systems vermittels Ausführung folgender Funktionen festzustellen oder zu berechnen:
a) Ermittlung der eigenen winkelmässigen Ausrichtung des Empfangsgerätes (45) relativ zu den Koordinaten des vorgegebenen raumfesten Koordinaten-Systems;
b)Ermittlung der Empfangsrichtung eines Lichtstrahles relativ zu den eigenen Gehäusedimensionen des Empfangsgerätes (45);
c)Errechnung der Winkellage des Adapters (30) im vorgegebenen raumfesten Koordinaten-System nach Massgabe von Messwerten, welche mittels Funktionen a) und b) gewonnen wurden, unter Verwendung einer im Empfangsgerät (45) angebrachten Elektronik oder durch ein intern oder extern angebrachtes Rechengerät.

2. Vorrichtung nach Anspruch 1, bei der anstelle der Ermittlung der Empfangsrichtung eines Lichtstrahles nach mehreren Winkelkoordinaten nur der Empfang eines Lichtstrahles mit einer vordefinierter Einstrahlrichtung relativ zu dem Empfangsgerät (45) überprüft wird und zu einer Richtungsmessung für eine Ausrichtung verwendet wird.

3. Vorrichtung nach Anspruch 1 oder 2, **dadurch gekennzeichnet, dass** die Ermittlung der Empfangsrichtung eines Lichtstrahles unter Zuhilfenahme zweier, voneinander beabstandeter, optoelektronischer Sensoren vorgenommen wird, wobei die Sensoren jeweils einzeln die Lage eines auf sie auftreffenden Lichtpunktes nach mindestens zwei Richtungen oder Koordinaten bestimmen können.

## Claims

1. Device for mutually aligning bodies, in particular for the parallel alignment of shafts, rollers (11, 12, 13) or rotationally symmetric bodies, with a combined position-measuring sensor, consisting of a receiving unit (45, 38') and an adaptor (30), which can be fitted onto a body to be aligned, in particular a roller (11), and is provided with a system (44) emitting a light beam, wherein the light beam is oriented parallel to a distinguished axis, specifically an axis of rotation of such a body or of such a roller (11), and wherein the receiving unit (45) is suitable for determining or computing the angular position of adaptor (30) and body or roller (11) with respect to a predetermined spatially fixed coordinate system by means of the performance of the following functions:
a) Determination of the specific angular alignment of the receiving unit (45) relative to the coordinates of the predetermined spatially fixed coordinate system;
b) Determination of the direction of reception of a light beam relative to the specific housing dimensions of the receiving unit (45);
c) Computation of the angular position of the adaptor (30) in the predetermined spatially fixed coordinate system on the basis of measured values which have been obtained by means of functions a) and b), with the use of an electronic system fitted within the receiving unit (45) or by an internally or externally fitted computer.

2. Device according to Claim 1, in which, in place of the determination of the direction of reception of a light beam according to a plurality of angular coordinates, only the reception of a light beam having a predefined direction of incidence relative to the receiving unit (45) is examined and is used for a direction measurement for an alignment.

3. Device according to Claim 1 or 2, **characterized in that** the determination of the direction of reception of a light beam is undertaken with the aid of two mutually spaced optoelectronic sensors, the sensors being capable in each instance of individually determining the position of a light spot incident on them according to at least two directions or coordinates.

## Revendications

1. Dispositif servant à aligner des éléments entre eux, notamment à aligner parallèlement des arbres, des cylindres (11, 12, 13) ou des éléments symétriques en rotation, comportant une sonde de mesure de position combinée, composée d'un appareil récepteur (45, 38') et d'un adaptateur (30) qui peut être posé sur un élément à aligner, notamment un cylindre (11), et est équipé d'un dispositif émettant un rayon lumineux (44), le rayon lumineux étant orienté parallèlement à un axe précisé, spécialement un axe de rotation d'un tel élément ou d'un tel cylindre (11), et l'appareil récepteur (45) étant apte à détecter ou à calculer l'orientation angulaire de l'adaptateur (30) et du corps ou du cylindre (11) par rapport à un système de coordonnées prédéfini fixe dans l'espace en réalisant les fonctions suivantes :
a) détermination de l'orientation angulaire propre de l'appareil récepteur (45) par rapport aux coordonnées du système de coordonnées prédéfini fixe dans l'espace ;
b) détermination du sens de réception d'un rayon lumineux par rapport aux propres dimensions du boîtier de l'appareil récepteur (45) ;
c) calcul de l'orientation angulaire de l'adaptateur (30) dans le système de coordonnées prédéfini fixe dans l'espace en fonction de valeurs de mesure qui ont été obtenues au moyen des fonctions a) et b), en utilisant une électronique installée dans l'appareil récepteur (45) ou grâce à un calculateur installé à l'intérieur ou à l'extérieur.

2. Dispositif selon la revendication 1, dans lequel, au lieu de déterminer le sens de réception d'un rayon lumineux en fonction de plusieurs coordonnées d'angle, on contrôle et on utilise pour réaliser une mesure de sens pour un alignement seulement la réception d'un rayon lumineux à sens d'irradiation prédéfini par rapport à l'appareil récepteur (45).

3. Dispositif selon la revendication 1 ou 2, **caractérisé en ce que** la détermination du sens de réception d'un rayon lumineux est effectuée à l'aide de deux capteurs optoélectroniques espacés l'un de l'autre, les capteurs pouvant déterminer chacun individuellement la position d'un point lumineux leur arrivant dessus en fonction d'au moins deux sens ou coordonnées.
